# EUROPÄISCHE PATENTSCHRIFT

(11) **EP 1 123 334 B1**
(45) Veröffentlichungstag und Bekanntmachung des Hinweises auf die Patenterteilung: **30.07.2003**
(21) Anmeldenummer: 99947426.5
(22) Anmeldetag: 27.09.1999
(51) Int. Cl.: C08G 18/70, C08G 18/08, C09D 175/04, C09D 5/00

(54) **PULVERLACK-SLURRY MIT MIKROVERKAPSELTEN PARTIKELN, IHRE HERSTELLUNG UND IHRE VERWENDUNG**
COATING POWDER SLURRY WITH MICROENCAPSULATED PARTICLES, AND PRODUCTION AND USE OF THE SAME
SUSPENSION EPAISSE DE LAQUE EN POUDRE RENFERMANT DES PARTICULES MICRO-ENCAPSULEES, SA PRODUCTION ET SON UTILISATION

(30) Priorität: 09.10.1998 DE 19846650
(43) Veröffentlichungstag der Anmeldung: 16.08.2001
(73) Patentinhaber: BASF Coatings AG, 48165 Münster (DE)
(72) Erfinder: BENDIX, Maximilian, D-59302 Oelde (DE); POTH, Ulrich, D-48165 Münster (DE)
(74) Vertreter: Fitzner, Ulrich, Dr.
(86) Internationale Anmeldenummer: EP9907161
(87) Internationale Veröffentlichungsnummer: WO00022023

(56) Entgegenhaltungen:
- EP-A- 0 062 780
- EP-A- 0 805 171
- DE-A- 19 621 836

## Beschreibung

Die vorliegende Erfindungen betrifft eine Pulverlack-Slurry, insbesondere eine Pulverklarlack-Slurry, enthaltend mindestens ein hydroxylgruppenhaltiges Bindemittel A und ein Vernetzungsmittel B mit freien Isocyanatgruppen sowie Wasser, wobei die Komponenten als mikroverkapselte Partikel vorliegt. Weiterhin betrifft die Erfindungen ein Verfahren zur Herstellung einer solchen Pulverlack-Slurry sowie deren Verwendung zur Herstellung beschichteter Substrate.

Im Rahmen der vorliegenden Erfindung ist unter einer Pulverlack-Sluny eine Dispersion von Partikeln fester filmbildender Überzugsmittel in Wasser zu verstehen. Dabei können Überzugsmittel-Partikel in ihrer Zusammensetzung gleich oder verschieden sein. Beispielsweise können die Partikel sowohl ein Bindemittel A oder eine Bindemittelmischung A als auch ein Vernetzungsmittelgemisch B enthalten. Alternativ hierzu kann ein Teil der Überzugsmittel-Partikel im wesentlichen aus dem Bindemittel A oder der Bindemittelmischung A und ein anderer Teil im wesentlichen aus dem Vernetzungsmittel B oder dem Vernetzungsmittel B bestehen. Die Überzugsmittel-Partikel können außerdem übliche und bekannte Zusatzstoffe enthalten, sofern diese nicht separat im Wasser dispergiert oder gelöst vorliegen.

Zur Herstellung von Klarlacken sind die verschiedensten Überzugsmittel bekannt. Klarlacke von hoher Beständigkeit gegenüber Chemikalien, Lösemitteln, saurem Regen und Bewitterung werden aus Überzugsmitteln auf der Basis von hydroxylgruppenhaltigen Polyacrylaten (Polyhydroxypolyacrylate) erhalten, welche mit freien Polyisocyanaten vernetzt werden. Nachteilig ist hierbei einerseits, daß es sich um Zweikomponentensysteme handelt, und andererseits, daß der Anteil an organischen Lösemitteln im Bereich von 40 bis 45 Gew.-% liegt.

Zur Vermeidung von Lösemittelemissionen sind daher verschiedene Pulverklarlacke entwickelt worden.

So sind Pulverklarlacke auf Basis von hydroxylgruppenhaltigen Polymeren und verkappten Polyisocyanaten bekannt, wobei als Verkappungsmittel epsilon-Caprolactam und/oder Ketoxime verwendet werden. Nachteile dieser Pulverlacke sind das Erfordernis besonderer Applikationseinrichtungen, Kontaminationsempfindlichkeit, das Erfordernis hoher Schichtdicken für brauchbaren Verlauf und hoher Einbrenntemperaturen. Das Erfordernis besonderer Applikationseinrichtungen stört bei der Integration der Pulverlacktechnologien in bereits vorhandene Lackierstraßen aus wirtschaftlichen und technologischen Gründen, insbesondere, weil eine teilweise Neuinstallation der Lackierstraßen erforderlich ist. Das Erfordernis der hohen Schichtdicken resultiert aus den relativ großen Partikeln von ca. 25 mikrometer und stört aus wirtschaftlichen Gründen und aus Gründen des Gewichts.

Des weiteren sind Pulverklarlacke auf der Basis epoxidgruppenhaltiger Polyacrylate, welche mit Polycarbonsäuren oder deren Anhydride vernetzbar sind, bekannt. Auch sie weisen die vorstehend genannten Nachteile auf. Zudem wird nicht die Beständigkeit von lösemittelhaltigen Zweikomponenten-Klarlacken erreicht. Gleiches gilt fiir die bekannten Pulverklarlacke auf der Basis von hydroxylgruppenhaltigen Polyacrylaten und Polyisocyanaten gemäß der deutschen Patentschrift DE-A-44 06 157.

Pulverlack-Slurries sind beispielsweise aus den Patentschriften DE-A-196 13 554 und WO 96/32452 bekannt. Sie basieren auf epoxidgruppenhaltigen Polyacrylaten, welche mit Polycarbonsäuren vernetzt werden. Diese bekannten Pulverlack-Slurries sind auf konventionellen Applikationseinrichtungen verarbeitbar und weisen praktisch keine organischen Lösemittel auf. Sie können indes noch weiter optimiert werden, damit die hieraus hergestellten Klarlacke das Eigenschaftsprofil der Zweikomponenten-Klarlacke erreichen.

Was den Begriff "freie Isocyanatgruppen" betrifft, sind im Rahmen der vorliegenden Erfindungen die folgenden Erläuterungen und Definitionen erforderlich. Ein Polyisocyanat, dessen Isocyanatgruppen überwiegend mit einem Verkappungsmittel geschützt sind, enthält praktisch keine freien Isocyanatgruppen mehr. Die Verwendung solcher verkappter Polyisocyanate in Überzugsmitteln hat jedoch den Nachteil, daß bei der Freisetzung der lsocyanatgruppen beim Einbrennen in sehr beachtlichem Umfang Verkappungsmittel und hieraus resultierende Produkte freigesetzt werden, was aus Gründen des Umweltschutzes nachteilig ist und häufig zu niedrigeren Kochergrenzen führt. Letzteres bedeutet, daß sich in den Beschichtungen beim Einbrennen Gasblasen bilden, wenn eine bestimmte Schichtdicke überschritten wird. Es sind deshalb Polyisocyanate entwickelt worden, welche als diskrete Partikel vorliegen und deren an der Partikeloberfläche angeordneten Polyisocyanatgruppen mit einem Desaktivierungsmittel umgesetzt worden sind. Der Begriff der Umsetzung umfaßt hierbei nicht nur chemische Reaktionen der oberflächenständigen lsocyanatgruppen mit dem Desaktivierungsmittel, sondern auch eine physikalische Blockierung der Oberfläche der Partikel beispielsweise durch Physisorption oder Chemiesorption. Im Volumen der Partikel liegen die Isocyanatgruppen in jedem Fall frei vor. Der Anteil der mit einem Desaktivierungsmittel umgesetzten Isocyanatgruppen zu den freien Isocyanatgruppen des Volumens eines Partikels liegt meist unter 0,3, in aller Regel sogar erheblich unter 0,1. Daher werden solche sogenannten mikroverkapselten Polyisocyanate zu den unverkappten Polyisocyanaten gezählt. Wird ein mikroverkapseltes Polyisocyanat mit einem Bindemittel erhitzt, so schmelzen die Polyisocyanapartikel und die zuvor rein geometrisch und/oder physikalisch geschützten Isocyanatgruppen des Volumens werden für die Vernetzungsreaktionen zugänglich und können das Bindemittel vernetzen.

Die Mikroverkapselung ist an sich bekannt unter beispielsweise in den Patentschriften DE-A-32 28 670, DE-A-32 28 724, DE-A-3112 054, DE-A-32 30 757, US-A-4, 888,124 oder EP-A-0 510 476 beschrieben. Hierbei wird i.d.R. das feste feingemahlene Polyisocyanat in einem flüssigen Polyol dispergiert, welches zugleich die reaktive Gegenkomponente für die Vernetzung bildet. Diese Systeme dienen der Herstellung von Schäumen oder von Unterbodenschutz. Für die Herstellung von Lacken mit hohen Anforderungen an Oberflächenverlauf und Glanz sind sie nicht geeignet.

DE-A-19621836 offenbart einen Pulverlack enthaltend ein hydroxylgruppenhaltigen Bindemittel und ein Vernetzungsmittel mit freien Isocyanatgruppen, das im Bindemittel dispergiert ist. Die Oberfläche der Polyisocyanatteilchen können desaktiviert sein.

Aufgabe der vorliegenden Erfindung ist es, einen Einkomponentenlack, insbesondere einen Einkomponentenklarlack, zu finden, welcher insbesondere Klarlacke liefert, die den aus Zweikomponentenlacken hergestellten Klarlacken, insbesondere im Glanz, ebenbürtig sind, und welcher mit den üblichen Spritzapplikationseinrichtungen aufgetragen werden kann und dabei ebenso geringe Schadstoffemissionen wie Pulverklarlacke aufweist. Außerdem soll der Einkomponentenlack eine hervorragende Lagerstabilität und einen guten Verlauf auch bei geringer Schichtdicke aufweisen.

Demgemäß wurde die neue Pulverlack-Slurry, insbesondere die neue Pulverklarlack-Slurry, gefunden, enthaltend mindestens ein hydroxylgruppenhaltiges Bindemittel A, mindestens ein Polyisocyanat als Vernetzungsmittel B und Wasser, wobei
1) die hydroxylgruppenhaltigen Bindemittel A und die Polyisocyanate B derart homogenisiert sind, daß nicht weniger als 30, vorzugsweise nicht weniger als 60 und insbesondere nicht weniger als 90 Gew.-% des Polyisocyanats B in den die Bindemittel A enthaltenden Partikeln dispergiert oder gelöst sind und
2) die gegebenenfalls noch in der wäßrigen Phase befindlichen Partikel des Polyisocyanats B sowie die Partikel, welche die Bindemittel A und die Polyisocyanate B enthalten, über die an ihrer Oberfläche vorhandenen Isocyanatgruppen mittels eines der wäßrigen Phase zugesetzten Desaktivierungsmittels stabilisiert sind.

Überraschenderweise können somit unverkappte Polyisocyanate B zusammen mit einem Bindemittel A in Wasser dispergiert werden, um so eine lagerstabile Pulverlack-Slurry zu bilden, wenn die Mikroverkapselung der Partikel in der wäßrigen Phase mittels des Desaktivierungsmittels durchgeführt wird. Da die Desaktivierung überwiegend nicht mit dem Bindemittel A durchgeführt wird, können Überzüge, insbesondere Klarlacke, mit sehr gutem Verlauf und hohem Glanz auch bei für Pulverlacke untypisch niedrigen Schichtdicken erhalten werden. Die aus der erfindungsgemäßen Pulverlack-Slurry hergestellten Überzüge und Klarlacke weisen Beständigkeitseigenschaften auf, welche an diejenigen von Klarlacken heranreichen, die aus Zweikomponentensystemen hergestellt worden sind. Schließlich wird praktisch emissionsfrei gearbeitet, da organische Lösemittel, wenn überhaupt, nur in sehr geringen Mengen in der erfindungsgemäßen Pulverlack-Slurry enthalten sind.

Für die erfindungsgemäße Pulverlack-Slurry ist es wesentlich, daß die Homogenisierung so weit geht, daß nicht weniger als 30, vorzugsweise nicht weniger als 60 und insbesondere nicht weniger als 90 Gew.-% des Polyisocyanats B in den diskreten Bindemittelpartikeln A verteilt, d.h. gelöst oder dispergiert sind.

Erfindungsgemäß liegen die Polyisocyanate B zusammen mit den Bindemitteln A in den Partikeln vor. Aus praktischen Gründen können indes weniger als 100 Gew.-% der Polyisocyanate B in den Partikeln neben den Bindemitteln A vorliegen. In diesem Fall bilden die Polyisocyanate B Partikel, welche als separate diskrete Phase vorliegen. Wesentlich ist, daß nicht weniger als 30, vorzugsweise nicht weniger als 60 und insbesondere nicht weniger als 90 Gew.-% der Polyisocyanate B in den Partikeln enthaltend sind, in denen die Bindemittel A vorliegen. Mit anderen Worten, höchstens 70, vorzugsweise höchstens 40 und insbesondere höchstens 10% der Polyisocyanate B sollen als separate diskrete Partikel vorliegen.

Erfindungsgemäß ist es von Vorteil wenn die Bindemittel A und Vernetzungsmittel B in einem Mengenverhältnis verwendet werden, daß das molare Verhältnis von Hydroxylgruppen zu Isocyanatgruppen bei 0,6 : 1 bis 1 : 1,4, insbesondere bei 0,8 : 1 bis 1 : 1,2 liegt.

Außerdem können übliche Zusatzstoffe, insbesondere Entgasungsmittel, Verlaufmittel, Lichtschutzmittel wie UV-Absorber und Radikalfänger, Entschäumungsmittel, Antioxidantien und Stabilisatoren vorhanden sein, wobei die Zusatzstoffe entweder in den Partikeln und/oder der wäßrigen Phase vorliegen. Des weiteren kann mindestens ein Katalysator für die Reaktion der Hydroxylgruppen mit den Isocyanatgruppen zugegen sein.

In einer bevorzugten Ausführungsform enthält das Bindemittel A:
a) 50-100 Gew.-%, vorzugsweise 66-100 Gew.-%, eines Polyhydroxypolyacrylats,
b) 0-50 Gew.-%, vorzugsweise 0,1 bis 34 Gew.-%, eines oder mehrerer von a) verschiedenen Bindemittels aus der Gruppe "Polyole, Polyhydroxypolyurethane, Polyhydroxypolyester, Polyepoxide". Das Polyhydroxypolyacrylat a) kann erhältlich sein durch Umsetzung von
a1) 7 bis 60 Gew.-% Hydroxyalkyl(meth)acrylaten mit primären, sekundären und/oder tertiären OH-Gruppen,
a2) 40-93 Gew.-% (Cyclo)alkylester der (Meth)acrylsäure mit 1 bis 18 C-Atomen im (Cyclo)alkylrest,
a3) 0-5 Gew.-% (Meth)acrylsäure,
a4) 0-30 Gew.-%, vorzugsweise 0-10 Gew.-%, mehrfache (Meth)acrylsäureester von Polyalkoholen,
a5) 0-40 Gew.-%, vorzugsweise 0-35 Gew.-% von a1 bis a4 verschiedenen Comonomeren, wobei die Summe der Gewichtsteile der Komponenten a1 bis a5 100% beträgt, wobei die Komponente a1 mit der Maßgabe ausgewählt ist, daß mindestens 40% der OH-Gruppen des Polyhydroxypolyacrylats a an sekundäre oder tertiäre C-Atome gebunden sind und wobei das Polyhydroxypolyacrylat a eine OH-Zahl von 30 bis 200, vorzugsweise von 70 bis 170, eine Säurezahl von 0 bis 50, vorzugsweise von 0 bis 35, eine mittlere Molmasse (Zahlenmittel), bestimmt mittels der GPC-Methode gegen Polystyrolstandard), von 1500 bis 30000, vorzugsweise von 1700 bis 18000, sowie eine Glasübergangstemperatur von 40 bis 85°C, vorzugsweise von 45 bis 75°C, aufweist.

Das Vernetzungsmittel B weist bevorzugterweise einen NCO-Gehalt von 5,0 bis 30 Gew.-%, vorzugsweise von 12 bis 23 Gew.-%, bei einer mittleren NCO-Funktionalität von zumindest 2,1, vorzugsweise von zumindest 2,4, und einem Gehalt an monomeren Diisocyanaten mit einem Molekulargewicht von unter 300 von unter 1,5 Gew.-% auf. Die Glasübergangstemperatur beträgt 40 bis 150°C, vorzugsweise 50 bis 135°C (gemessen mittels der Differentialthermoanalyse, DTA).

In einer Weiterbildung der Erfindung kann eines oder mehrere von dem Vernetzungsmittel B verschiedene Vernetzungsmittel aus der Gruppe "Aminoharze, Carbamatharze, verkappte Polyisocyanate" in einer Menge bis zu 60 Gew.-% des Vernetzungsmittels B enthalten sein.

Als Desaktivierungsmittel wird vorzugsweise einer oder mehrere Stoffe aus der Gruppe "Alkohole, OH-funktionelle Polyether, Monoamine, Polyamine, OH-funktionelle Amine, NH-funktionelle Polyether, OH- und NH-funktionelle Polyether" verwendet.

Die Erfindung umfaßt schließlich die Verwendung der erfindungsgemäßen Pulverklarlack-Slurry zur Herstellung eines beschichteten Substrats, insbesondere einer Kfz-Karosserie oder eines Kfz-Karosserieteils, wobei auf das Substrat, ggf. nach Auftrag einer Grundierung und/oder eines Füllers, ein dekorativer Decklack aufgetragen und nach einer Vortrocknung anschließend das Pulverklarlack-Slurry mit üblichen Spritzapplikationseinrichtungen aufgetragen wird und wobei der Decklack und der Pulverklarlack ggf. nach einer weiteren Vortrocknung gemeinsam eingebrannt werden.

Die Hydroxylgruppen der Bindemittel-Komponente A bestehen vorteilhafterweise zu mindestens 40, vorzugsweise mindestens 50 und besonders bevorzugt zu 90 bis 100% aus an sekundäre und/oder tertiäre Kohlenstoffatome gebundenen Hydroxylgruppen und im übrigen, d.h. bis maximal 50 %, vorzugsweise bis maximal 30% und besonders bevorzugt bis maximal 10% aus an primäre Kohlenstoffatome gebundenen alkoholischen Hydroxylgruppen.

Als Bindemittel-Komponente A sind Polyhydroxypolyacrylate, Polyhydroxypolyurethane oder Polyhydroxypolyester geeignet.

Die Polyhydroxypolyurethane werden durch Umsetzung von urethangruppenfreien Polyolen (a) mit Düsocyanaten (b) unter Einhaltung eines OH/NCO-Äquivalentverhältnisses von 1,1 : 1 bis 10 : 1, bevorzugt von 1,2 : 1 bis 2 : 1, besonders bevorzugt von 1,3 : bis 1,8 : 1, bei Temperaturen von im allgemeinen 40 bis 200°C, bevorzugt von 60 bis 160°C, erhalten, mit der Maßgabe, daß das Äquivalentverhältnis von primär gebundenen OH-Gruppen in den Ausgangspolyolen (a) zu NCO-Gruppen der Diisocyanate (b) OHₚᵣᵢₘ./ NCO < 1 ist.

Zum Aufbau der Polyhydroxypolyurethane geeignete Polyole (a) sind:
(a1) aliphatische oder cycloaliphatische, gegebenenfalls Ethergruppen aufweisende mehrwertige Alkohole des Molekulargewichtsbereichs 62 bis 400, vorzugsweise 76 bis 261,
(a2) Estergruppen aufweisende Polyhydroxylverbindungen eines mittleren, aus Funktionalität und OH-Zahl berechenbaren Molekulargewichtes von 134 bis 2000, vorzugsweise von 176 bis 1500, und einer mittleren OH-Funktionalität von 2,0 bis 4,0 und gegebenenfalls, aber weniger bevorzugt,
(a3) weiteren Estergruppen aufweisenden Polyhydroxylverbindungen eines mittleren, aus Funktionalität und OH-Zahl berechenbaren Molekulargewichtes oberhalb 2000 bis 10 000, vorzugsweise bis 5000 und OH-Zahlen zwischen 20 und 200, vorzugsweise zwischen 40 und 160.

Zum Einbau der sekundär und/oder tertiär gebundenen OH-Gruppen werden in der Regel Polyole der Gruppe (a1) verwendet. Geeignet sind z.B. 1,2-Propandiol, 1,2-, 1,3- und 2,3-Butandiol, 3-Methyl-1,3-butandiol, 2,5-Hexandiol, 2-Methyl-2,4-pentandiol, 1,2-Octandiol, 2-Ethyl-1,3-hexandiol, 2,5-Dimethyl-2,5-hexandiol, 2,2,4-Trimethyl-1,3-pentandiol, 1,2-Hexadecandiol, 1,12-Octadecandiol, 1,2- und 1,4-Cyclohexandiol, 2,2,4,4-Tetramethyl-1,3-cyclobutandiol, 2,2-Bis-(4-hydroxycyclohexyl)-propan, Glycerin und 1,2,6-Hexantriol. Als weitere Polyole der Gruppe (a1) können gegebenenfalls auch Polyole mit ausschließlich primär gebundenen OH-Gruppen mitverwendet werden, falls überhaupt, jedoch in der Regel in untergeordneten Anteilen. Geeignet hierfür sind z.B. 1,2-Ethandiol, 1,3-Propandiol, 1,4-Butandiol, 1,6-Hexandiol, Diethylenglykol, Triethylenglykol, Dipropylenglykol, Neopentylglykol, Cyclohexandimethanol, 1,1,1-Trimethylolethan, 1,1,1-Trimethylolpropan, Pentaerythrit oder 1,3,5-Tris(2-hydroxyethyl) isocyanurat.

Bei den zur Herstellung der Polyhydroxypolyurethane verwendeten Estergruppen aufweisenden Polyhydroxylverbindungen (a2) handelt es sich um an sich bekannte Esteralkohole oder Esteralkohol-Gemische, wie sie beispielsweise durch Umsetzung von mehrwertigen Alkoholen mit unterschüssigen Mengen an mehrwertigen Carbonsäuren, entsprechenden Carbonsäureanhydriden, entsprechenden Polycarbonsäureestern von niederen Alkoholen oder durch Umsetzung von mehrwertigen Alkoholen mit Lactonen herstellen lassen. Zur Herstellung der Esteralkohole (a2) geeignete mehrwertige Alkohole sind insbesondere solche des Molekulargewichtsbereichs 62 bis 400, wie sie unter Punkt (a1) beispielhaft aufgeführt wurden, und wobei solche Einschränkungen bezüglich primär, sekundär oder tertiär gebundener OH-Gruppen gelten, daß die letztendlich erhaltenen Polyhydroxypolyurethane den erforderlichen Gehalt an sekundär und/oder tertiär gebundenen Hydroxylgruppen aufweisen. Die zur Herstellung der Esteralkohole verwendeten Säuren oder Säurederivate können aliphatischer, cycloaliphatischer, aromatischer und/oder heteroatomatischer Natur sein und gegebenenfalls, z.B. durch Halogenatome, substituiert und/oder ungesättigt sein. Beispiele geeigneter Säuren sind beispielsweise mehrwertige Carbonsäuren des Molekulargewichtsbereichs 118 bis 300 oder deren Derivate wie beispielsweise Bernsteinsäure, Adipinsäure, Sebacinsäure, Phthalsäure, Isophthalsäure, Trimellithsäure, Phthalsäureanhydrid, Tetrahydrophthalsäure, Maleinsäure, Maleinsäureanhydrid, dimere und trimere Fettsäuren, Terephthalsäuredimethylester und Terephthalsäure-bis-glykolester. Zur Herstellung der Esteralkohole können auch beliebige Gemische der beispielhaft genannten Ausgangsverbindungen eingesetzt werden. Ihre Herstellung wird z.B. in Houben-Weyl, MV/2, S. 1-46 beschrieben. Bevorzugt kommen zur Herstellung der Polyhydroxypolyurethane als Ausgangskomponente (a2) jedoch auch Esterpolyole zum Einsatz, wie sie in an sich bekannter Weise aus Lactonen und einfachen mehrwertigen Alkoholen als Startermolekülen unter Ringöffnung herstellen lassen, vorausgesetzt, es werden ausreichende Mengen an Aufbaukomponenten mit sekundär und/oder tertiär gebundenen Hydroxylgruppen mitverwendet, um den diesbezüglichen erfindungswesentlichen Bedingungen zu entsprechen. Geeignete Lactone zur Herstellung dieser Esterpolyole sind beispielsweise β-Propiolacton, γ-Butyrolacton, δ-Valerolacton und δ-Caprolacton, 3,5,5- und 3,3,5-Triethylcaprolacton oder beliebige Gemische solcher Lactone. Als Startermoleküle dienen beispielsweise die oben beispielhaft genannten mehrwertigen Alkohole (a1) des Molekulargewichtsbereichs 62 bis 400 oder beliebige Gemische dieser Alkohole. Die Herstellung der bevorzugten Esterpolyole erfolgt im allgemeinen in Gegenwart von Katalysatoren wie beispielsweise Lewis oder Brönstedt-Säuren, organischen Zinn- oder Titanverbindungen bei Temperaturen von 20 bis 200°C, vorzugsweise 50 bis 160°C.

Die gegebenenfalls zur Herstellung der Polyhydroxypolyurethane auch einsetzbaren Estergruppen aufweisenden Polyhydroxylverbindungen (a3) eines höheren Molgewichtsbereichs werden wie unter (a2) beschrieben aus prinzipiell den gleichen genannten Ausgangsverbindungen hergestellt.

Bevorzugte Komponenten (a1) sind 1,2-Propandiol, 2-Methyl-2,4-pentandiol, 2-Ethyl-1,3-hexandiol und 2,2,4-Trimethyl-1,3-pentandiol. Bevorzugte Komponenten (a2) sind solche auf Basis von 1,6-Hexandiol, 1,1,1-Trimethylolpropan und δ-Caprolacton, Isophthalsäure, Phthalsäureanhydrid, Tetrahydrophthalsäure, Maleinsäureanhydrid und Adipinsäure. Komponenten (a3) werden, wenn überhaupt, nur in untergeordneten Mengen mitverwendet.

Zum Aufbau der Polyhydroxypolyurethane geeignete Diisocyanate (b) sind grundsätzlich solche des Molekulargewichtsbereichs 140 bis 300 mit (cyclo)aliphatisch gebundenen Isocyanatgruppen, wie z.B. 1,4-Diisocyanatobutan, 1,6-Diisocyanatohexan (HDI), 2-Methyl-1,5-diisocyanatopentan, 2,2-Dimethyl-1,5-diisocyanatopentan, 2,2,4- bzw. 2,4,4-Trimethyl-1,6-diisocyanatohexan, 1,10-Diisocyanatodecan, 1,3- und 1,4-Diisocyanatocyclohexan, 2- bzw. 4-Methyl-1,3-diisocyanatocyclohexan, 1,3- bzw. 1,4-Bis-(2-isocyanatoprop-2-yl)benzol, 1-lsocyanato-3,3,5-trimethyl-5-isocyanatomethylcyclohexan (IPDI) und 4'4'-Diisocyanatodicyclohexylmethan (HMDI). Bevorzugt eingesetzte Diisocyanate (b) sind HDI, IPDI und HMDI, wobei letzteres ganz besonders bevorzugt ist.

Zur Herstellung der Polyhydroxypolyurethane können beliebige Gemische an Polyolen (a) mit beliebigen Gemischen an Diisocyanaten (b) umgesetzt werden. In der Regel werden die Polyole (a) als Gemische, ausgewählt aus der Gruppe der Polyole(a1) und der Estergruppen aufweisenden Polyole(a2), gegebenenfalls auch (a3), eingesetzt, wobei die Zusammensetzung so gewählt wird, daß die obengenannten Bedingungen des OH/NCO-Verhältnisses und des OH_{prim.}/NCO-Verhältnisses eingehalten werden.

Für die Herstellung der Polyhydroxypolyurethane geeignete Gemische an Polyolen (a) resultieren beispielsweise auch dann, wenn die als Ausgangsmaterial eingesetzten mehrwertigen Alkohole (a1) der beispielhaft genannten Art mit unterschüssigen Mengen an Säuren bzw. Säurederivaten der beispielhaft genannten Art nur teilweise in Esteralkohole (a2) überführt werden.

Die Ausgangsmaterialien (a) und (b) werden neben den genannten Einschränkungen außerdem so ausgewählt, daß Polyhydroxypolyurethane im Rahmen des oben für die Polyolkomponenten a2) genannten OH-Zahlbereichs als bei Raumtemperatur feste Harze mit den genannten Glasübergangstemperaturen T_{g} von 30 bis 120, vorzugsweise 40 bis 100°C entstehen.

Die Herstellung der erfindungsgemäß geeigneten Polyhydroxypolyurethane kann einstufig oder mehrstufig erfolgen. So kann die Gesamtmenge der eingesetzten Polyole (a) vorgelegt und mit den Diisocyanaten (b) umgesetzt werden. Man kann aber auch z.B. mit einer Teilmenge der Polyole (a1) die Diisocyanate (b) unter milden Reaktionsbedingungen zu sek./tert. -OH- und NCO-gruppenhaltigen Voraddukten umsetzen und dann z.B. die primäre OH-Gruppen aufweisenden Polyole (a2) einreagieren lassen. In einer weiteren Ausführungsform können auch primäre OH-Gruppen aufweisende Polyole (a1) und/oder (a2) mit überschüssigem Diisocyanat (b) zu NCO-endständigen Prepolymeren umgesetzt werden und nachfolgend durch Umsetzung mit Polyolen(a1) und/oder gegebenenfalls auch (a2), die sek. und/oder tert. OH-Gruppen eingeführt werden. Die zur Urethanbildung erforderliche Reaktionstemperatur liegt bei 20 bis 200°C, bevorzugt bei 40 bis 160°C, besonders bevorzugt bei 40 bis 120°C Die Umsetzung wird bevorzugt ohne Lösungsmittel durchgeführt. Zur Beschleunigung der Urethanisierungsreaktion können die üblichen aus der Polyurethanchemie bekannten Katalysatoren eingesetzt werden, beispielsweise tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(II)-chlorid, Zinkchlorid, Zink-2-ethylcaproat, Zinn-(II)-2-ethylcaproat, Dibutylzinn(IV)-dilaurat und Molybdänglykolat. Diese Katalysatoren kommen gegebenenfalls in Mengen von 0,001 bis 2,0 Gew.-%, bevorzugt 0,01 bis 0,5 Gew.-%. bezogen auf die Gesamtmenge der verwendeten Ausgangsverbindungen zum Einsatz. Obwohl die Herstellung der Polyhydroxypolyurethane ohne Lösungsmittel in Schmelze bevorzugt wird, kann in manchen Fällen die Verwendung inerter Lösungsmittel angezeigt sein. In diesen Fällen schließt sich anschließend ein geeignetes Ausdampfverfahren an, um die erhaltenen Verbindungen vom Lösungsmittel zu befreien und die festen Harze zu isolieren. Geeignete Ausdampfverfahren sind z.B. solche, wie nachfolgend bei der Herstellung geeigneter Polyhydroxypolyacrylate aufgeführt.

Die als mögliche Bindemittel-Komponente A einzusetzenden Polyhydroxypolyacrylate entsprechen bezüglich der Bindungsart der Hydroxylgruppen, ihrer OH-Zahl und ihrer Glasübergangstemperatur den oben allgemein für die Komponente A genannten Bedingungen. Solche Polyhydroxypolyacrylate sind auf verschiedenen Wegen zugänglich:
1. Verwendung von Hydroxypropyl(meth)acrylat (bei der Anlagerung von Propylenoxid an (Meth)acrylsäure entstehendes Isomerengemisch mit ca. 75 sekundär und ca. 25 primär gebundenen OH-Gruppen) als hydroxyfunktionelle Comonomere bei der Herstellung der Polyacrylate.
   Bei der Herstellung solcher Polyacrylate werden in der Regel drei Arten von Monomeren eingesetzt und zwar (i) 7 bis 60 Gew.-Teile Hydroxypropyl(meth)acrylat, (ii) 93 bis 40 Gew.-Teile nichtfunktioneller olefinisch ungesättigter Verbindungen und (iii) 0 bis 5 Gew.-Teile carboxyfunktioneller olefinisch ungesättigter Verbindungen, wobei die Summe der Gew.-Teile der Komponenten (i) bis (iii) 100 beträgt Bei den Monomeren (ii) handelt es sich beispielsweise um Aromaten wie z.B. Styrol, Vinyltoluol, α-Methylstyrol und α-Ethylstyrol; um (Cyclo)Alkylester der Acryl- oder Methacrylsäure mit 1 bis 18 Kohlenstoffatomen im (Cyclo)Alkylrest, wie z.B. Methyl(meth)acrylat, Ethyl(meth)acrylat, n-Propyl(meth)acrylat, Isopropyl(meth)acrylat. n-Butyl(meth)acrylat, Isobutyl(meth)acrylat, tert.-Butyl(meth)acrylat, 2-Ethylhexyl(meth)acrylat, Cyclohexyl(meth)acrylat, Neopentyl(meth)acrylat, Isobornylmethacrylat, Benzylmethacrylat, Phenylethylmethacrylat, 3,3,5-Trimemylcyclo-hexylmethacrylat und Stearylmethacrylat, um Dialkylester der Malein- undloder Fumarsäure mit 1 bis 12 Kohlenstoffatomen im Alkylrest, wie z.B. Maleinsäuredimethylester, Maleinsäurediethylester, Maleinsäuredi-n-propylester, Maleinsäurediisopropylester, Maleinsäure-di-n-butylester, Maleinsäurediisobutylester, Maleinsäuledi-tert.-butylester, Maleinsäuredi-2-ethylhexylester, Maleinsäuredicyclohexylester und die entsprechenden Fumarsäureester. Bei den Monomeren (iii) handelt es sich beispielsweise um Acrylsäure, Methacrylsäure und Maleinsäure- bzw. Fumarsäurehalbester mit 1 bis 12 Kohlenstoffatomen im Alkoholrest. Entsprechend geeignete Alkylreste sind z.B. bei den Dialkylestern der Malein- bzw. Fumarsäure der Monomeren (ii) genannt.
   Bei der Herstellung der Polyacrylatpolyole können innerhalb der oben angegebenen Mengenanteilsgrenzen jeweils beliebige Gemische der Monomeren (i) bis (iii) verwendet werden, mit der Maßgabe, daß diese Auswahl bei der Herstellung der Copolymerisate so erfolgt, daß die resultierenden Copolymerisate Hydroxylzahlen und Glasübergangstemperaturen innerhalb der obengenannten Bereiche aufweisen. Diese für die erfmdungsgemäße Verwendbarkeit der Copolymerisate vorteilhafte Bedingung wird dann erfüllt, wenn bei der Herstellung der Copolymerisate ein geeignetes Verhältnis von "weichmachenden" Monomeren, die zur Erniedrigung der Glasübergangstemperatur der Copolymeren führen, zu "hartmachenden" Monomeren, die zur Erhöhung der Glasübergangstemperatur führen, zur Anwendung gelangt. "Weichmachende" Monomere sind beispielsweise Alkylester der Acrylsäure, wie z.B. Ethylacrylat, n-Butylacrylat, Isobutylacrylat und 2-Ethylhexylacrylat. "Hartmachende" Monomere sind beispielsweise Alkylester der Methacrylsäure, wie z.B. Methylmethacrylat, Ethylmethacrylat, Isobutylmethacrylat, Cyclohexylmethacrylat, Isopropylmethacrylat, tert.-Butylmethacrylat, Neopentylmethacrylat, Isobornylmethacrylat und 3,3,5-Trimethylcyclohexylmethacrylat, Vinylaromaten, wie z.B. Styrol, Vinyltoluol und α-Ethylstyrol.
   Die Herstellung der Polyhydroxypolyacrylate erfolgt durch radikalisch initiierte Copolymerisation der obengenannten Monomeren in geeigneten organischen Lösungsmitteln. Dabei werden die Monomeren bei Temgeraturen von 60 bis 180°C, vorzugsweise 80 bis 160°C, in Gegenwart von Radikalbildnem und gegebenenfalls Molekulargewichtsreglern copolymerisiert. Die Lösungsmittel weisen bei 1013 mbar einen Siedepunkt oder -bereich innerhalb des Temperaturbereichs von 50 bis 150, vorzugsweise 75 bis 130°C auf. Zur Herstellung der Copolymerisate geeignete Lösungsmittel sind beispielsweise Aromaten, wie Toluol oder Xylol; Ester, wie Methylacetat, Ethylacetat, Isopropylacetat, n-Propylacetat, Isobutylacetat, n-Butylacetat oder Methyl-n-amylacetat; Ketone, wie 2-Propanon, 2-Butanon, 2-Pentanon, 3-Pentanon, 3-Methyl-2-butanon, 4-Methyl-2-pentanon, 5-Methyl-2-hexanon oder 2-Heptanon; Alkohole wie n-Butanol, n-Pentanol oder Hexanole; Ether wie Butylglykoldimethyl- oder Propylenglykoldimethylether oder beliebige Gemische derartiger Lösungsmittel. Die Herstellung der Polyhydroxypolyacrylate kann kontinuierlich oder diskontinuierlich erfolgen. Üblicherweise wird in einen Polymerisationsreaktor gleichmaßig und kontinuierlich die Monomermischung und der Initiator eindosiert und gleichzeitig die entsprechende Menge Polymerisat kontinuierlich abgeführt. So können chemisch nahezu einheitliche Copolymere hergestellt werden. Chemisch nahezu einheitliche Copolymere können auch hergestellt werden, indem man die Reaktionsmischung mit konstanter Geschwindigkeit in einen Rührkessel einlaufen läßt, ohne das Polymer abzuführen. Man kann beispielsweise auch einen Teil der Monomeren in Lösungsmitteln der genannten Art vorlegen und die restlichen Monomeren und Hilfsmittel getrennt oder gemeinsam in diese Vorlage bei der Reaktionstemperatur eintragen. Im allgemeinen erfolgt die Polymerisation unter Atmosphärendruck, kann jedoch auch bei Drücken bis zu 25 bar durchgeführt werden. Die Initiatoren werden in Mengen von 0,05 bis 15 Gew.-%, bezogen auf die Gesamtmenge der Monomeren, eingesetzt. Geeignete Initiatoren sind übliche Radikalstarter, wie z.B. aliphatische Azoverbindungen, wie Azodiisobuttersäurenitril, Azo-bis-2-methylvaleronitril, 1,1-Azo-bis-1-cyclohexannitril und 2,2'-Azo-bis-isobuttersäurealkylester, symmetrische Diacylperoxide wie z.B. Acetyl-, Propionyl- oder Butyrylperoxid, mit Brom-, Nitro- oder Methoxygruppen substituierte Benzoylperoxide, Laurylperoxide; symmetrische Peroxydicarbonate, z.B. Diethyl-, Diisopropyl-, Dicyclohexylsowie Dibenzoylperoxydicarbonat; tert-Butylperoxy-2-ethyl-hexanoat, tert-Butylperbenzoat; Hydroperoxide, wie beispielsweise tert-Butylhydroperoxid, Cumolhydroperoxid, Dialkylperoxide, wie Dicumylperoxid; tert- Butylcumylperoxid oder Di-tert.-butylperoxid. Zur Regelung des Molekulargewichtes der Copolymerisate können übliche Regler bei der Herstellung eingesetzt werden. Beispielhaft genannt seien tert.-Dodecylmercaptan, n-Dodecylmercaptan oder Diisopropylxanthogendisulfid. Die Regler können in Mengen von 0,1 bis 10 Gew.-%, bezogen auf die Gesamtmenge des Monomeren, zugegeben werden. Zur Isolierung der lösungsmittelfreien Polyhydroxypolyacrylate werden die erhaltenen Lösungen einem Lösungsmittelentfernungsprozeß unterzogen, wobei das Lösungsmittel möglichst vollständig entfernt wird. Ein solcher Lösungsmittelentfernungsprozeß kann z.B. sein: Sprühtrocknung, Entgasung in speziellen oder handelsüblichen Ausdampfextrudern oder Schlangenrohrverdampfern, Destillation im Vakuum oder Hochvakuum. Die Polyhydroxypolyacrylate können alternativ auch in Abwesenheit von Lösungsmitteln der genannten Art in Substanz hergestellt und als heiße Schmelze ausgetragen und konfektioniert werden. Bei einem solchen Prozeß wird ein Teil der Monomeren, vorzugsweise Maleinsäuredialkylester, vorgelegt und die restlichen Monomeren und der Initiator getrennt oder gemeinsam in diese Vorlage bei der Reaktionstemperatur eingetragen, wobei diese vorzugsweise im Bereich von 140 bis 180°C liegt. Das fertige Polymerisat wird als Schmelze aus dem Reaktor ausgetragen, abgekühlt und anschließend granuliert.
2. Umsetzung von geeigneten carboxylfunktionellen Polyacrylaten mit entsprechend substituierten Monoepoxiden wie z.B. Isobutylenoxid (2-Methyl-1,2-epoxypropan), Isoamylenoxid (2-Methyl-2,3-epoxybutan), Neohexenoxid (3,3-Dimethyl-1,2-epoxybutan), cis- und/oder trans-2,3-Butylenoxid und Cyclohexenoxid (1,2-Epoxycyclohexan). Die Umsetzung solcher Epoxide mit carboxylfunktionellen Polyacrylaten erfolgt in der Regel bei Temperaturen von 80 bis 200°C, vorzugsweise 100 bis 180°C unter Zuhilfenahme von Katalysatoren. Zweckmäßig wird die Reaktion wegen der niedrigen Siedepunkte der Epoxide in Druckreaktoren unter Drücken bis zu 20 bar durchgeführt. Geeignete Katalysatoren sind beispielsweise Salze von tert. Ammoniumverbindungen wie z.B. Tetrabutylammoniumchlorid oder Tetrabutylammoniumbromid.
   Die benötigten carboxylfunktionellen Polyacrylate werden in gleicher Weise hergestellt wie die zuvor genannten hydroxylfunktionellen Polyacrylate mit dem Unterschied, daß keine OH-funktionellen Monomeren zum Einsatz gelangen. Dabei werden als carboxylfunktionelle Monomere vorzugsweise Acrylsäure oder Methacrylsäure verwendet, es können jedoch auch Halbester der Maleinsäure und Fumarsäure zum Einsatz kommen. Eine besondere Variante der Herstellung von carboxylfunktionellen Polyacrylaten geht von cyclischen Anhydridgruppen enthaltenden Polyacrylaten aus, die unter Verwendung von Maleinsäureanhydrid hergestellt werden, welche in einem zweiten Reaktionsschritt mit monofunktionellen Alkoholen mit 1 bis 17 Kohlenstoffatomen, gegebenenfalls in Gegenwart von z.B. Aminkatalysatoren, zum entsprechenden Halbester umgesetzt werden.
   Bei den neben carboxyl- und/oder anhydridfunktionellen Monomeren mitzuverwendenden weiteren nichtfunktionellen Comonomeren handelt es sich prinzipiell um die gleichen Vertreter, die schon bei den zuvor beschriebenen hydroxyfunktionellen Polyacrylaten beispielhaft genannt wurden.
3. Umsetzung von geeigneten epoxidfunktionellen Polyacrylaten mit Monocarbonsäuren wie z.B. Essigsäure, Propionsäure, Buttersäure, Isobuttersäure, Valeriansäure, Isovaleriansäure, Ethylmethylessigsäure, Trimethylessigsäure und 2-Ethylhexansäure. Prinzipiell sind auch längerkettige Carbonsäuren mit bis zu 17 Kohlenstoffatomen geeignet, jedoch müssen dann die umzusetzenden epoxyfunktionellen Polyacrylate entsprechend hohe Glasübergangstemperaturen aufweisen, damit nach der Umsetzung mit Monocarbonsäuren Polyhydroxypolyacrylate mit Glasübergangstemperaturen resultieren, die im gewünschten Bereich von 30 bis 120°C liegen.
4. Umsetzung von geeigneten hydroxyfunktionellen Polyacrylaten mit Düsocyanaten und entsprechend substituierten aliphatischen und/oder cycloaliphatischen Diolen. Geeignete hydroxyfunktionelle Polyacrylate sind beispielsweise solche wie zuvor schon unter 1. genannt und zusätzlich solche, die statt sekundäre auch primäre Hydroxylgruppen aufweisen. Dabei sind primäre Hydroxylgruppen aufweisende Polyacrylate, die z.B. durch Verwendung von Hydroxyethyl(meth)acrylat als OH-Monomer herstellbar sind, bevorzugt. Geeignete Comonomere wurden unter 1. zuvor schon genannt. Für die Umsetzung geeignete Diisocyanate sind die bei der Herstellung der Polyhydroxypolyurethane unter (b) genannten Verbindungen, geeignete aliphatische und/oder cycloaliphatische Diole mit sekundär und/ oder tertiär gebundenen OH-Gruppen sind die dort in der ersten beispielhaften Gruppe unter (a1) aufgeführten Verbindungen. Bei den auf diesem Weg erhältlichen erfindungsgemäß geeigneten Polyhydroxypolyacrylaten entspricht das Herstellverfahren dem bei der Herstellung der Polyhydroxypolyurethane beschriebenen Verfahren.

Weiterhin sind die folgend beschriebenen Bindemittel-Komponenten A einsetzbar. Als Bindemittel-Komponente A können die erfindungsgemäßen Pulverlack-Slurries mindestens
A1) ein hydroxylgruppenhaltiges Acrylatcopolymerisat(Al) mit einer Glasübergangstemperatur von 40 bis 85°C, bevorzugt 45 bis 75°C (jeweils gemessen mit Hilfe der differential scanning calometrie (DSC)), einem zahlenmittleren Molekulargewicht von 1.500 bis 30.000 Dalton, bevorzugt 2.500 bis 10.000 (jeweils gelpermeations- chromatographisch bestimmt unter Verwendung eines Polystyrolstandards), und einer OH-Zahl von 60 bis 130 mgKOH/g, bevorzugt 100 bis 170 mgKOH/g, wobei die Hydroxylgruppen des Bindemittels (A1) bis zu 60 %, bevorzugt bis zu 50 %, aus primär gebundenen OH-Gruppen bestehen, und/oder
A2) das Umsetzungsprodukt aus einem carboxylgruppenhaltigen Acrylatcopolymerisat und einer epoxidgruppenhaltigen Verbindung oder das Umsetzungsprodukt aus einem epoxidgruppenhaltigen Acrylatcopolymerisat und einer carboxylgruppenhaltigen Verbindung, wobei die Carboxy/Epoxy-Umsetzung jeweils vor oder während der Reaktion des Bindemittels A mit dem Vernetzungsmittel B erfolgen kann.

Als Bindemittel A sind beispielsweise hydroxylgruppenhaltige Polyacrylatharze (A1) geeignet, die durch Copolymerisation von mindestens einem ethylenisch ungesättigten Monomer, das mindestens eine Hydroxylgruppe im Molekül enthält, mit mindestens einem weiteren ethylenisch ungesättigten Monomer, das keine Hydroxylgruppe im Molekül enthält, herstellbar sind, wobei mindestens eines der Monomere ein Ester der Acrylsäure oder Methacrylsäure ist. Geeignete hydroxylgruppenhaltige Polyacrylatharze (A1) sind auch z.B. bekannt aus DE-A-43 37 480, DE-A-41 18 052.

Als hydroxylgruppenhaltige Monomere werden beispielsweise Hydroxyethyl(meth)acrylat, Hydroxypropyl (meth)acrylat, Hydroxybutyl(meth)acrylat und Hydroxymethylcyclohexenyl(meth)acrylat genannt, wobei bevorzugt Hydroxyethylmethacrylat, ggf. zusammen mit anderen hydroxylgruppenhaltigen Monomeren, eingesetzt wird. Als Beispiele für ethylenisch ungesättigte Monomere, die keine Hydroxylgruppe im Molekül enthalten, werden Alkylester der Acryl- und Methacrylsäure, die 1 bis 20 Kohlenstoffatome im Alkylrest enthalten, insbesondere Methylacrylat, Methylmethacrylat, Ethylacrylat, Ethylmethacrylat, Butylacrylat, Butylmethacrylat, 2-Ethylhexylacrylat und 2-Ethylhexylmethacrylat genannt. Weitere Beispiele für ethylenisch ungesättigte Monomere, die keine Hydroxylgruppen im Molekül enthalten, sind Säureamide, wie z.B. Acrylsäureund Methacrylsäureamid, vinylaromatische Verbindungen, wie Styrol, Methylstyrol und Vinyltoluol, Nitrile, wie Acrylnitril und Methacrylnitril, Vinylund Vinylidenhalogenide, wie Vinylchlorid und Vinylidenfluorid, Vinylester, wie z.B. Vinylacetat und carboxylgruppenhaltige Monomere, wie z.B. Acrylsäure und Methacrylsäure.

Ferner kann in dem erfindungsgemäßen Pulverlack-Slurry als Bindemittel A oder als weiteres Bindemittel auch das Umsetzungsprodukt aus einem carboxylgruppenhaltigen Acrylatcopolymerisat und einer epoxidgruppenhaltigen Verbindung oder das Umsetzungsprodukt aus einem epoxidgruppenhaltigen Acrylatcopolymerisat und einer carboxylgruppenhaltigen Verbindung eingesetzt werden. Die Carboxy/Epoxy-Umsetzung kann dabei vor der Mischung mit dem isocyanatgruppenhaltigen Vernetzer erfolgen, d.h. als Bindemittel A wird das Umsetzungsprodukt eingesetzt. Es ist aber auch möglich, in dem erfindungsgemäßen Pulverlack-Slurry eine Mischung aus der epoxidgruppenhaltigen Komponente und der carboxylgruppenhaltigen Komponente einzusetzen. In diesem Fall erfolgt die Carboxy/Epoxy-Umsetzung erst während der Aushärtung des Pulverlacks, wobei die bei der Carboxy/Epoxy-Umsetzung gebildeten Hydroxylgruppen dann in situ mit dem Isocyanatvernetzer reagieren.

Für den Einsatz in dem erfindungsgemäßen Pulverlack-Slurry als Bindemittel-Komponente A sind z.B. epoxidgruppenhaltige Polyacrylatharze geeignet, die durch Copolymerisation von mindestens einem ethylenisch ungesättigten Monomer, das mindestens eine Epoxidgruppe im Molekül enthält, mit mindestens einem weiteren ethylenisch ungesättigten Monomer, das keine Epoxidgruppe im Molekül enthält, herstellbar sind, wobei mindestens eines der Monomere ein Ester der Acrylsäure oder Methacrylsäure ist. Derartige epoxidgruppenhaltige Polyacrylatharze sind z.B. bekannt aus EP-A-299 420, DE-B-22 14 650, DE-B-2749576, US-A-4,091,048 und US-A-3,781,379). Beispiele für ethylenisch ungesättigte Monomere, die keine Epoxidgruppe im Molekül enthalten, sind die bereits bei der Beschreibung der hydroxylgruppenhaltigen Acrylatcopolymerisate genannten Verbindungen. Das epoxidgruppenhaltige Polyacrylatharz weist üblicherweise ein Epoxidäquivalentgewicht von 300 bis 2.500, vorzugsweise 350 bis 700, ein zahlenmittleres Molekulargewicht (gelpermeationschromatographisch unter Verwendung eines Polystyrolstandards bestimmt) von 1.700 bis 20.000, vorzugsweise von 2.000 bis 10.000, und eine Glasübergangstemperatur (TG) von 30 bis 80, vorzugsweise von 40 bis 30, besonders bevorzugt von 40 bis 60°C auf (gemessen mit Hilfe der Differential Scanning Calorimetrie (DSC)). Ganz besonders bevorzugt werden ca. 50°C. Zum Einsatz können auch Gemische aus zwei oder mehr Acrylatharzen kommen. Für die Umsetzung mit den epoxidgruppenhaltigen Acrylatcopolymerisaten sind z.B. Carbonsäuren, insbesondere gesättigte, geradkettige, aliphatische Dicarbonsäuren mit 3 bis 20 C-Atomen im Molekül geeignet. Ganz besonders bevorzugt wird eine Dicarbonsäure mit 12 C-Atomen im Molekül, wie z.B. Dodecan-1,12-dicarbonsäure eingesetzt. Zur Modifizierung der Eigenschaften der fertigen Pulverlack-Slurries können ggf. noch andere Carboxylgruppen enthaltende Verbindungen eingesetzt werden. Als Beispiele hierfür seien gesättigte verzweigte oder ungesättigte geradkettige Diund Polycarbonsäuren sowie Polymere mit Carboxylgruppen genannt.

Ferner sind für die Herstellung der erfindungsgemäßen Pulverlacke auch carboxylgruppenhaltige Polyacrylatharze als Bindemittel-Komponente A geeignet, die durch Copolymerisation von mindestens einem ethylenisch ungesättigten Monomer, das mindestens eine Säuregruppe im Molekül enthält, mit mindestens einem weiteren ethylenisch ungesättigten Monomer, das keine Säuregruppe im Molekül enthält, herstellbar sind. Bevorzugt werden carboxylgruppenhaltige Acrylatcopolymerisate mit einer Glasübergangstemperatur von 30 bis 80°C, bevorzugt 40 bis 60°C (jeweils gemessen mit Hilfe der differential scanning calometrie (DSC)), einem zahlenmittleren Molekulargewicht von 1.700 bis 20.000 Dalton, bevorzugt 2.000 bis 10.000 (jeweils bestimmt gelpermeationschromatographisch unter Verwendung eines Polystyrolstandards), und einer Säurezahl von 60 bis 180 mgKOH/g, bevorzugt 100 bis 170 mgKOH/g, eingesetzt.

Die epoxidgruppenhaltige Verbindung und die carboxylgruppenhaltige Verbindung werden üblicherweise in einer solchen Menge eingesetzt, daß pro Äquivalent Epoxidgruppen 0,5 bis 1,5, vorzugsweise 0,75 bis 1,25 Äquivalente Carboxylgruppen vorliegen. Die Menge an vorliegenden Carboxylgruppen kann durch Titration mit einer alkoholischen KOH-Lösung ermittelt werden.

Bevorzugt werden in den erfindungsgemäßen Pulverlack-Slurry als Bindemittel A hydroxyl- bzw. carboxyl- bzw. epoxidgruppenhaltige Acrylatcopolymerisate eingesetzt, die einen Gehalt an vinylaromatischen Verbindungen von weniger als 50 Gew.-%, besonders bevorzugt von weniger als 30 Gew.-%, ganz besonders bevorzugt von 10 bis 25 Gew.-%, jeweils bezogen auf das Gesamtgewicht der eingesetzten Monomeren, enthalten.

Die vorstehend genannten hydroxyl- bzw. epoxid- bzw. carboxylgruppenhaltigen Polyacrylatharze können nach allgemein gut bekannten Methoden durch Polymerisation hergestellt werden. Selbstverständlich können auch beliebige Mischungen der genannten Bindemittel A eingesetzt werden.

In der erfindungsgemäßen Pulverlack-Slurry können ggf. zusammen mit dem hydroxylgruppenhaltigen Bindemittel A auf Acrylatbasis auch hydroxylgruppenhaltige Polyesterharze eingesetzt werden, die in üblicher Weise aus aromatischen oder aliphatischen oder cycloaliphatischen Di- und/oder Polyolen, ggf. in Kombination mit Monoolen, und aromatischen oder aliphatischen oder cycloaliphatischen Di- und/oder Polycarbonsäuren, ggf. in Kombination mit Monocarbonsäuren, hergestellt worden sind. Aufgrund der besseren Kreidungs- und Witterungsbeständigkeit werden vorzugsweise aliphatische und/oder cycloaliphatische Aufbaukomponenten für die Herstellung der Polyesterharze eingesetzt. Beispielsweise können die Polyesterharze hergestellt worden sein unter Verwendung von Ethylenglykol, Propandiol, Butandiol, Neopentylglykol, Hexandiol, Cyclohexandiol, 4,4'-Dihydroxycyclohexylpropan-2 , Trimethylolpropan, Hexantriol, Pentaerythrit. Als weitere Diole sind auch Ester von Hydroxycarbonsäuren mit Diolen geeignet, wobei als Diol die voranstehend genannten Diole eingesetzt werden können. Beispiele für Hydroxycarbonsäuren sind Hydroxypivalinsäure oder Dimethylolpropansäure. Als Säuren können z.B. Adipinsäure, Glutarsäure, Acelainsäure, Sebacinsäure, Fumarsäure, Maleinsäure, Tetrahydrophthalsäure, Hexahydrophthalsäure, Cyclohexandicarbonsäure, Phthalsäure, Terephthalsäure, Isophthalsäure und Trimellithsäure eingesetzt werden. Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen oder Hydroxyalkoholen mit 1 bis 4 C-Atomen. Außerdem können auch die Anhydride der obengenannten Säuren eingesetzt werden, sofern sie existieren. Geeignete hydroxylgruppenhaltige Polyesterharze sind auch z.B. bekannt ans der DE-A-25 47 124 und der EP-A-0 408 465.

Die als Bindemittel-Komponente A für sich einsetzbaren Polyhydroxypolyester entsprechen bezüglich der Art ihrer Hydroxylgruppen, ihrer OH-Zahl und ihrer Glasübergangstemperatur den bereits oben allgemein für die Komponente A angegebenen Bedingungen. Ihr mittleres (aus OH-Gehalt und OH-Funktionalität errechenbares) Molekulargewicht liegt im allgemeinen bei 400 bis 10 000, vorzugsweise 1000 bis 5000. Solche Polyhydroxypolyester sind auf verschiedenen Wegen zugänglich: Veresterung von Säuren oder Säurederivaten der bereits oben beispielhaft genannten Art mit überschüssigen Mengen an Di- und/oder Triolen mit sekundär und/oder tertiär gebundenen alkoholischen Hydroxylgruppen der bereits oben beispielhaft unter (a1) genannten Art oder Umsetzung geeigneter carboxylfunktioneller Polyester mit entsprechend substituierten Monoepoxiden. In diesem Fall können die für Pulverlacke bekannten Carboxylgruppen aufweisenden Polyester verwendet werden und wie oben bei der Herstellung der Polyhydroxypolyacrylate unter Punkt 2 beschrieben mit geeigneten und dort beispielhaft genannten Monoepoxiden umgesetzt werden.

Bei der Venetzungsmittel-Komponente B handelt es sich um an sich bekannte monomerenarme Lackpolyisocyanate mit einem Gehalt an primäre oder sekundäre aliphatische Kohlenstoffatome gebundenen freien Isocyanatgruppen von 5 bis 30 Gew.-%, vorzugsweise 12 bis 23 Gew.-%, einer mittleren NCO-Funktionalität von mindestens 2,1, vorzugsweise mindestens 2,4 und besonders bevorzugt mindestens 3,0 und einem Gehalt an monomeren Düsocyanaten mit einem unter 300 liegenden Molekulargewicht von maximal 0,5, vorzugsweise maximal 0,3 Gew.-%. Die Vernetzungsmittel-Komponente B weist vorzugsweise einen zwischen 30°C und 120°C liegenden Schmelzpunkt bzw. -bereich auf, jedoch ist dies keine zwingende Bedingung, da es lediglich darauf ankommt, daß die Komponenten B vorzugsweise unterhalb 30°C fest und oberhalb 120°C flüssig ist.

Die Vernetzungsmittel-Komponente B besteht vorzugsweise aus an sich bekannten, diesen Bedingungen entsprechenden, Urethangruppen und insbesondere Isocyanuratgruppen aufweisenden Lackpolyisocyanaten. Geeignete Isocyanuratgruppen aufweisende Polyisocyanate können, wie in EP-A-0003765, EP-A-0010589, EP-A-0017998, EP-A-0047452, EP-A-0187105, EP-A-0978614 oder EP-A-0330966 beschrieben, hergestellt werden. Urethangrupperimodifizier Polyisocyanate werden beispielsweise durch Umsetzung aliphatischer Diisocyanate mit beliebigen, mehrwertigen aliphatischen oder cycloaliphatischen, gegebenenfalls Ethergruppen oder Estergruppen aufweisenden, mehrwertigen Alkoholen des Molekulargewichtsbereichs 62 bis 1000 unter Einhaltung eines NCO/OH-Äquivalentverhältnisses von >2, vorzugsweise von 3 : 1 bis 15 : 1, insbesondere von 3 : 1 bis 7 : 1, bei Temperaturen von im allgemeinen 60 bis 120°C erhalten. Die Entfernung des überschüssigen monomeren Diisocyanats kann destillativ oder extraktiv erfolgen, wobei vorzugsweise das monomere Ausgangsdiisocyanat mittels einer Dünnschichtdestillationsapparatur innerhalb des Temperaturbereichs von 140 bis 200°C bei einem Druck zwischen 0,1 und 0,5 mbar abgetrennt wird, so daß 100 % Festkörper enthaltende Polyisocyanate mit dem angegebenen maximalen Monomergehalt von < 0,5 Gew.-%, vorzugsweise < 0,3 Gew.-%, erhalten werden.

Erfindungsgemäß als Vernetzungsmittel-Komponente B geeignet sind ebenfalls den obigen Bedingungen entsprechende Lackpolyisocyanate, die sowohl Urethanals auch Isocyanuratgruppen enthalten. Ebenfalls geeignet sind solche den obengenannten Bedingungen entsprechende Lackpolyisocyanate, die sowohl Allophanat- als auch Isocyanuratgruppen aufweisen, wie sie beispielsweise gemäß deutscher Patentanmeldung P 43 35 796.2 erhalten werden können. Allgemein ausgedrückt kann die Vernetzungsmittel-Komponente B aus folgend beispielhaft erläuterten aliphatischen und cycloaliphatischen Düsocyanaten, bzw. Mischungen daraus, im Wege der Oligomerisierung gewonnen werden, und zwar durch Herstellung von Isocyanuraten, Biureten, Allophanaten mit Mono- und Polyalkoholen, Carbodiimiden oder Urethanen von Polyalkoholen. Es können auch Mischungen solcher Oligomere verwendet werden.

Ausgangsdiisocyanate zur Herstellung der Vernetzungsmittel-Komponente B sind aliphatische Diisocyanate des Molekulargewichtsbereichs 140 bis 300, wobei 1-Isocyanato-33,5-trimethyl-5-isocyanatomethylcyclohexan (IPDI), 4,4'-Diisocyanato-dicyclohexylmethan (HMDI) und deren Gemische mit 1,6-Diisocyanatohexan (HDI) bevorzugt sind. Weiterhin ist auch m-TMXDI (1,3-Bis-(2-isocyanatoprop-2-yl)benzol) geeignet. Die zur Herstellung der Lackpolyisocyanate eingesetzten genannten Ausgangsdiisocyanate können gegebenenfalls Gemische darstellen und bestehen besonders bevorzugt zu 70 bis 100 Gew. % aus IPDI und/oder HMDI und zu 0 bis 30 Gew.-% aus HDL Auch Abmischungen entsprechender Zusammensetzung von IPDI- und HMDI-Homotrimerisaten mit HDI-Homotrimerisaten sind als Komponente B geeignet.

Üblicherweise werden für die Desaktivierung bis zu 30, vorzugsweise bis zu 20 und insbesondere bis zu 10 Mol-% der insgesamt vorhandenen Isocyanatgruppen mit dem Desaktivierungsmittel zur Reaktion gebracht. Wesentlich ist, daß so viele zur Reaktion gebracht werden, daß eine wasserdichte Verkapselung entsteht. Der untere Wert kann daher vom Fachmann für jeden Einzelfall leicht anhand einfacher Vorversuche ermittelt werden.

Für die vorliegende Erfindung ist es wesentlich, daß die Umsetzung in Wasser durchgeführt wird.

Als Desaktivierungsmittel kommen beispielsweise in Frage: Wasser, primäre und sekundäre Mono-, Di- und Polyamine, Hydrazinderivate, Amidine, Guanidine, Mono- und Polyalkohole sowie Verbindungen, die Carboxylgruppen, phenolische Hydroxylgruppen, Amidgruppen oder Hydrazidgruppen enthalten. Beispiele für geeignete Desaktivierungsmittel sind auch die in der EP-B-100508 in Spalte 6, Zeilen 10 bis 37, und Spalte 6, Zeile 53, bis Spalte 7, Zeile 19, und der EP-B-100507, Spalte 5, Zeilen 20 bis 58, genannten Verbindungen sowie die in der EP-A-431 413, der DE-A-35 17 333, der DE-A-32 30 757, der DE-A-35 29 530, DE-A-34 03 500 und der EP-A153 579 genannten Desaktivierungsmittel. Bezüglich weiterer Einzelheiten der Desaktivierung wird beispielsweise auf die EP-A-62 780, Seiten 6 und 7, die EP-B-100508, Spalten 6 und 7, sowie die EP-B-100 507, Spalte 5, verwiesen. Insbesondere geeignet sind auch Desaktivierungsmittel, wie sie in der Literaturstelle US-A-4,888,124, Spalte 5, Zeile 60, bis Spalte 7, Zeile 53, angegeben sind, worauf hiermit ausdrücklich verwiesen wird.

Die Funktion des Desaktivierungsmittels können auch spezifische Additive oder Bindemittelbestandteile, insbesondere auch der wäßrigen Phase zugegebene Lackhilfsstoffe, wie Stabilisatoren, Emulgatoren oder Verdicker, übernehmen, sofern nicht diese Stoffe in die Dispersionsteilchen hineindiffundieren mit der Folge der Quellung und/oder Koagulation. Eine besonders stabile Dispersion wird aber dann erreicht, wenn mindestens ein Teil der Stabilisatoren bzw. Emulgatoren ersetzt wird durch Stabilisatoren, die mit den an der Oberfläche der Dispersionsteilchen vorhandenen NCO-Gruppen reagieren und insofern eine Doppelfunktion, nämlich zusätzlich als Desaktivierungsmittel, ausüben. Bevorzugt werden solche Substanzen aus der vorstehenden Gruppe ausgewählt, die nicht nur selektiv mit oberflächenständigen NCO-Gruppen reagieren, sondern auch eine Stabilisierung der Dispersion in Wasser erzeugen, jedoch gewährleisten, daß nach der Applikation und dem Verdunsten des Wassers, während der ersten Einbrenn- bzw. Filmbildungsphase, die Partikel effektiv verfließen und glatte, homogene, klare Filme erzeugen.

Bei den gegebenenfalls zur Beschleunigung der Aushärtung der Pulverlackharze mitzuverwendenden Katalysatoren handelt es sich beispielsweise um die üblichen, aus der Polyurethanchemie bekannten Verbindungen, wie sie schon oben beim Verfahren zur Herstellung der Polyhydroxypolyurethane zur Katalyse der Urethanisierungsreaktion beispielhaft aufgeführt wurden. Wenn Katalysatoren zum Einsatz kommen, sind innerhalb dieser Gruppe Zink-, Zinn(II)- oder Zinn(IV)-Salze bevorzugt. Weitere Vertreter von geeigneten Katalysatoren sowie Einzelheiten über die Wirkungsweise von solchen Katalysatoren sind im Kunststoff-Handbuch, Band VII, herausgegeben von Vieweg und Höchtlen, Carl-Hanser-Verlag, München 1966, z.B. auf den Seiten 96 bis 102, beschrieben. Die Katalysatoren können gegebenenfalls in Mengen von 0,01 bis 5,0 Gew.-%, vorzugsweise 0,05 bis 1,0 Gew.-% bezogen auf die Gesamtmenge an organischem Bindemittel, d.h. der Kombination aus den Komponenten A und B aber exclusive den gegebenenfalls verwendeten weiteren Hilfs- und Zusatzmitteln, zugesetzt werden.

Außerdem können die festen Komponenten A und/oder B Hilfsmittel und Additive der vorstehend allgemein definierten Art enthalten. Ein Beispiel für ein Entgasungsmittel ist Benzoin. Als Verlaufmittel sind Stoffe auf der Basis von Polyacrylaten, Polysiloxanen bzw. Fluorverbindungen geeignet. Einsetzbare Antioxidantien sind Reduktionsmittel wie Hydrazide und Phosphorverbindungen sowie Radikalfänger z.B. 2,6 Di-tert-Buthylphenol. Verwendbare UV-Absorber sind bevorzugt Triazine und Benztriphenol. Als Radikalfänger sind 2,2,6,6 Tetramethylpiperidindervate einsetzbar.

Die wäßrige Phase der Pulverlack-Slurry kann wenigstens einen nicht-ionischen Verdicker enthalten. Bevorzugt werden nicht-ionische Assoziativ-Verdicker eingesetzt. Strukturmerkmale solcher Assoziativ-Verdicker sind:
aa) ein hydrophiles Gerüst, das eine ausreichende Wasserlöslichkeit sicherstellt und
ab) hydrophobe Gruppen, die zu einer assoziativen Wechselwirkung im wäßrigen Medium fähig sind.
Als hydrophobe Gruppen werden beispielsweise langkettige Alkylreste, wie z.B. Dodecyl-, Hexadecyl- oder Octadecyl-Reste, oder Alkarylreste, wie z.B. Octylphenyl- oder Nonylphenyl-Reste eingesetzt. Als hydrophile Gerüste werden vorzugsweise Polyacrylate, Celluloseether oder besonders bevorzugt Polyurethane eingesetzt, die die hydrophoben Gruppen als Polymerbausteine enthalten. Ganz besonders bevorzugt sind als hydrophile Gerüste Polyurethane, die Polyetherketten als Bausteine enthalten, vorzugsweise aus Polyethylenoxid. Bei der Synthese solcher Polyetherpolyurethane dienen die Di- und oder Polyisocyanate, bevorzugt aliphatische Diisocyanate, besonders bevorzugt ggf. alkylsubstituiertes 1,6-Hexamethylendiisocyanat, zur Verknüpfung der Hydroxylgruppen-terminierten Polyetherbausteine untereineinander und zur Verknüpfung der Polyetherbausteine mit den hydrophoben Endgruppenbausteinen, die beispielsweise monofunktionelle Alkohole und/oder Amine mit den schon genannten langkettigen Alkylresten oder Aralkylresten sein können. Weiterhin kann die wäßrige Phase Katalysatoren, Verlaufsmittel, Antioxidantien, UV-Absorber, Radikalfänger und Netzmittel enthalten. Im wesentlichen kommen hier die bereits für die Komponenten A und/oder B aufgezählten Stoffe in Betracht. Ferner können der wäßrigen Phase Hilfsstoffe, Entschäumungsmittel, Dispersionshilfsmittel, Biozide, Lösungs- und Neutralisationsmittel zugesetzt sein. Als Entschäumungsmittel kommen bevorzugt modifizierte Polysiloxane in Betracht. Dispersionshilfsmittel sind z.B. bevorzugt Ammonium bzw. Metallsalze von Polycarboxylaten. Verwendbare Neutralisationsmittel sind Amine und Metallhydroxide.

Das Bindemittel A und auch das Vernetzungsmittel B dürfen, damit sich die Applikations- und Filmeigenschaften der Pulverlack-Slurry auch nach längerer Lagerung des Materials nicht verändern, bei Raumtemperatur weder untereinander noch mit den zugesetzten Additiven oder dem als Lösemittel fungierenden Wasser reagieren.

Die erfindungsgemäße Pulverlack-Slurry ist auf verschiedene in der Pulverlack-Slurry-Technologie übliche Verfahren herstellbar.

Nach dem erfindungsgemäßen Verfahren werden indes die Bindemittel-Komponente A und die Vernetzungsmittel-Komponente B nach ihrer Synthese als Feststoffe ausgetragen und anschließend in üblicher und bekannter Weise in geschmolzenem Zustand mit Hilfe von Knetern oder Extrudern homogenisiert, wobei sie ggf. unter Verwendung von Vakuum von organischen Lösungsmitteln befreit werden.

Für das erfindungsgemäße Verrfahren ist es hierbei wesentlich, daß die Homogenisierung so weit vorangetrieben wird, daß nicht weniger als 30, vorzugsweise nicht weniger als 60 und insbesondere nicht weniger als 90 Gew.-% des Polyisocyanats B in den die Bindemittel A enthaltenden Partikeln dispergiert oder gelöst sind.

Erfindungsgemäß liegen die Polyisocyanate B und die Bindemittel in den Partikeln vor. Aus praktischen Gründen können indes auch weniger als 100% der Polyisocyanate B in den Partikeln enthalten sein. Sie bilden dann Partikel, welche als diskrete separate Phase vorliegen. Wesentlich ist, daß nicht weniger als 30%, vorzugsweise nicht weniger als 90% der Polyisocyanate B in den Partikeln enthalten sind, die die Bindemittel A enthalten.

Nach der Homogenisierung werden die Partikel bis zu einer mittleren Korngröße von 80 bis 100µm mittels üblicher Methoden vermahlen. Dann wird das resultierende Pulver unter Zugabe des Desaktivierungsmittels sowie ggf. unter Zugabe von weiteren Additiven und ggf. in mehreren Schritten mit Wasser (deionisiert) versetzt und mittels der Naßvermahlung (siehe z.B. die Patentschrift DE 19613547 A1) auf eine mittlere Korngröße < 10 µm vermahlen. Dabei kann stattdessen das Wasser alle oder auch nur einen Teil der Additive enthalten.

Die erfindungsgemäße Pulverlack-Slung hat vorteilhafterweise einen Anteil an unter Vernetzungsbedingungen flüchtigen organischen Bestandteilen von unter 1,5 %. Die nichtflüchtigen Anteile liegen zweckmäßigerweise im Bereich von 25 bis 55 Gew.-%, bevorzugt von 30 und 45 Gew.-%. Für die Applikation wird die erfindungsgemäße Pulver-Slurry mit Wasser und/oder mit Verdicker auf die geeignete Spritzviskosität eingestellt.

Das erfindungsgemäße Pulverlack-Slurry läßt sich als pigmentierter Lack oder in Form eines Klarlacks als Überzug von dekorativen Basislacken, vorzugsweise in der Automobilindustrie, verwenden. Die erfindungsgemäßen Pulverlack-Slurries lassen sich mit den aus der Flüssiglacktechnologie bekannten Methoden aufbringen. Insbesondere können sie mittels Spritzverfahren aufgebracht werden. Ebenso kommen elektrostatisch unterstützte Hochrotation oder pneumatische Applikation in Betracht. Die auf eine (dekorative) Basislackschicht aufgebrachten Pulverklarlack-Slurries werden regelmäßig vor dem Einbrennen abgelüftet. Dies geschieht zweckmäßigerweise zunächst bei Raumtemperatur und/oder bei leicht erhöhter Temperatur. In der Regel beträgt die erhöhte Temperatur 40 bis 70°C, vorzugsweise 50 bis 65°C. Das Ablüften wird für 2 bis 20 Minuten, vorzugsweise 4 bis 8 Minuten durchgeführt. Es kann auch zunächst bei Raumtemperatur über die genannte Zeitspanne abgelüftet werden und anschließend bei der genannten erhöhten Temperatur. Bei der erhöhten Temperatur wird dann nochmals während derselben Zeitspanne abgelüftet. Das Einbrennen kann bereits bei Temperaturen von 130°C durchgeführt werden. Durchführbar ist das Einbrennen bei 130 bis 180°C vorzugsweise 135 bis 145°C, und über eine Zeitspanne von 10 bis 50 min, vorzugsweise 12 bis 30 min. Der Auftrag der Pulverlack-Slurry erfolgt bevorzugt in einer Menge, daß nach dem Einbrennen eine Schichtdicke der resultierenden Lackschicht von 30 bis 50 µm, vorzugsweise 35 bis 45 µm, erreicht wird. Diese Schichtdicken reichen völlig aus, um einen hochglänzenden Klarlack-Film zu erhalten. Hinsichtlich der Beständigkeit werden eine MEK-Beständigkeit von mehr als 100 Doppelhüben und eine gute Schwitzwasserbeständigkeit erhalten.

## Patentansprüche

1. Pulverlack-Slurry, insbesondere Pulverklarlack-Slurry, enthaltend mindestens ein hydroxylgruppenhaltiges Bindemittel A, mindestens ein Polyisocyanat als Vernetzungsmittel B und Wasser, **dadurch gekennzeichnet, daß**
1. die hydroxylgruppenhaltigen Bindemittel A und die Polyisocyanate B derart homogenisiert sind, daß nicht weniger als 30, vorzugsweise nicht weniger als 60 und insbesondere nicht weniger als 90 Gew.-% des Polyisocyanats B in den die Bindemittel A enthaltenden Partikeln dispergiert oder gelöst sind und
2. die ggf. noch in der wäßrigen Phase befindlichen Partikel des Vernetzungsmittels B sowie die Partikel, welche die Bindemittel A und Vernetzungsmittel B enthalten, über die an ihrer Oberfläche vorhandenen Isocyanatgruppen mittels eines der wäßrigen Phase zugesetzten Desaktivierungsmittels stabilisiert sind.

2. Pulverlack-Slurry nach Anspruch 1, **dadurch gekennzeichnet, daß** die Komponenten A und B in einem Mengenverhältnis eingesetzt sind mit der Maßgabe, daß OH-Gruppen und NCO-Gruppen in einem molaren Verhältnis OH : NCO von 0,6 : 1 bis 1 : 1,4, vorzugsweise 0,8 bis 1 : 1,2, vorliegen.

3. Pulverlack-Slurry nach Anspruch 1 oder 2, **dadurch gekennzeichnet, daß** übliche Lackzusatzstoffe, insbesondere Entgasungsmittel, Verlaufinittel, Lichtschutzmittel wie UV-Absorber und Radikalfänger, Entschäumer, Antioxidantien und Stabilisatoren, enthalten sind.

4. Pulverlack-Slurry nach einem der Ansprüche 1 bis 3, **dadurch gekennzeichnet, daß** zumindest ein Katalysator für die Reaktion von OH-Gruppen mit NCO-Gruppen enthalten ist.

5. Pulverlack-Slurry nach einem der Ansprüche 1 bis 4, **dadurch gekennzeichnet, daß** das Bindemittel A enthält:
i) 50 - 100 Gew.-%. vorzugsweise 66 - 100 Gew.-%, eines Polyhydroxypolyacrylats a,
ii) 0-50 Gew.-%, vorzugsweise 0,1 bis 34 Gew.-%, eines oder mehrerer von a) verschiedenen Bindemittel aus der Gruppe der Polyole, Polyhydroxypolyurethane, Polyhydroxypolyester oder Polyepoxide.

6. Pulverlack-Slurry nach Anspruch 5, **dadurch gekennzeichnet, daß** das Polyhydroxypolyacrylat a erhältlich ist durch Umsetzung von
a1) 7 bis 60 Gew.-% Hydroxyalkyl(meth)acrylate mit primären, sekundären und/oder tertiären OH-Gruppen,
a2) 40 - 93 Gew.g% (Cyclo)alkylester der (Meth)acrylsäure mit 1 bis 18 C-Atomen im (Cyclo)alkylrest,
a3) 0-10 Gew.-% (Meth)acrylsäure,
a4) 0 - 30 Gew.-%, vorzugsweise 0 - 10 Gew.-%, mehrfacher (Meth)acrylsäureester von Polyalkoholen,
a5) 0 - 40 Gew.-%, vorzugsweise 0 - 35 Gew.-% von a1 bis a4 verschiedener Comonomere,
wobei die Summe der Gewichtsteile der Komponenten a1 bis a5 100 % beträgt, wobei die Komponente a1 mit der Maßgabe ausgewählt ist, daß mindestens 40% der OH-Gruppen des Polyhydroxypolyacrylats a an sekundäre oder tertiäre C-Atome gebunden sind und wobei das Polyhydroxypolyacrylat a eine OH-Zahl von 30 bis 200, vorzugsweise von 70 bis 170, eine Säurezahl von 0 bis 50, vorzugsweise von 0 bis 35, eine mittlere Molmasse (Zahlenmittel, bestimmt mittels der GPC-Methode gegen Polystyrolstandard) von 1500 bis 30000, vorzugsweise von 1700 bis 18000, sowie eine Glasübergangstemperatur von 40 bis 85°C, vorzugsweise von 45 bis 75°C, aufweist.

7. Pulverlack-Slurry nach einem der Ansprüche 1 bis 6, **dadurch gekennzeichnet, daß** das Vernetzungsmittel B einen NCO-Gehalt von 5,0 bis 30 Gew.-%, vorzugsweise von 12 bis 23 Gew.-%, bei einer mittleren NCO-Funktionalität von zumindest 2,1, vorzugsweise von zumindest 2,4, und einem Gehalt an monomeren Diisocyanaten mit einem Molekulargewicht von unter 300 von unter 1,5 Gew.-% aufweist, und daß das Vernetzungsmittel B eine Glasübergangstemperatur von 40 bis 150°C, vorzugsweise 50 bis 135°C, aufweist.

8. Pulverlack-Slurry nach einem der Ansprüche 1 bis 7, **dadurch gekennzeichnet, daß** eines oder mehrere von dem Vernetzungsmittel B verschiedener Vernetzungsmittel aus der Gruppe Aminoharze, Carbamatharze und verkappte Polyisocyanate in einer Menge bis zu 60 Gew.-% des Vernetzungsmittels B enthalten ist oder sind.

9. Pulverlack-Slurry nach einem der Ansprüche 1 bis 8, **dadurch gekennzeichnet, daß** als Desaktivierungsmittel einer oder mehrere Stoffe aus der Gruppe Alkohole, OH-funktionelle Polyether, Monoamine, Polyamine, OH-funktionelle Amine, NH-funktionelle Polyether und OH- und NH-funktionelle Polyether verwendet wird oder werden.

10. Verfahren zur Herstellung der Pulverlack-Slurry gemäß einem der Ansprüche 1 bis 9, durch Homogenisieren der Bindemittel A und der Vernetzungsmittel B, Vermahlen des resultierenden Gemischs und Naßvermahlen des resultierenden Pulvers auf eine mittlere Korngröße unterhalb 10 µm, **dadurch gekennzeichnet, daß**
1) die hydroxylgruppenhaltigen Bindemittel A und die Polyisocyanate B soweit homogenisiert werden, daß nicht weniger als 30, vorzugsweise nicht weniger als 60 und insbesondere nicht weniger als 90 Gew.-% des Polyisocyanats B in den die Bindemittel A enthaltenden Partikel dispergiert oder gelöst sind, und
2) die ggf. noch in der wäßrigen Phase befindlichen Partikel des Vernetzungsmittels B sowie die Partikel, welche die Bindemittel A und die Vernetzungsmittel B enthalten, über die an ihrer Oberfläche vorhandenen Isocyanatgruppen mittels eines der wäßrigen Phase zugesetzten Desaktivierungsmittels stabilisiert werden.

11. Verwendung der Pulverlack-Slurry, nach einem der Ansprüche 1 bis 9 oder der gemäß Anspruch 10 hergestellten Pulverlack-Slurry zur Herstellung eines beschichteten Substrats, insbesondere einer Kfz-Karosserie oder eines Kfz-Karosserieteils, wobei auf das Substrat, ggf. nach Auftrag einer Grundierung und/oder eines Füllers, ein dekorativer Decklack aufgetragen und nach einer Vortrocknung anschließend die Pulverklarlack-Slurry mit üblichen Spritzapplikationseinrichtungen aufgetragen wird und wobei der Decklack und der Pulverklarlack ggf. nach einer weiteren Vortrocknung gemeinsam eingebrannt werden.

## Claims

1. A powder coating slurry, especially a powder clearcoat slurry, comprising at least one hydroxyl-containing binder A, at least one polyisocyanate crosslinking agent B, and water, wherein
1. the hydroxyl-containing binders A and the polyisocyanates B have been homogenized such that not less than 30, preferably not less than 60 and in particular not less than 90% by weight of the polyisocyanate B are present in solution or dispersion in the particles comprising the binders A, and
2. the particles of the crosslinking agent B which may still be present in the aqueous phase, and the particles comprising the binders A and the crosslinking agents B, have been stabilized, by way of the isocyanate groups present on their surface, by means of a deactivator added to the aqueous phase.

2. The powder coating slurry as claimed in claim 1, wherein components A and B are used in a proportion with the proviso that OH groups and NCO groups are present in a molar ratio OH:NCO from 0.6:1 to 1:1.4, preferably from 0.8:1 to 1:1.2.

3. The powder coating slurry as claimed in claim 1 or 2, comprising customary coatings additives, especially devolatilizers, leveling agents, light stabilizers such as UV absorbers and free-radical scavengers, defoamers, antioxidants, and stabilizers.

4. The powder coating slurry as claimed in any of claims 1 to 3, comprising at least one catalyst for the reaction of OH groups with NCO groups.

5. The powder coating slurry as claimed in any of claims 1 to 4, wherein the binder A comprises:
i) 50-100% by weight, preferably 66-100% by weight, of a polyhydroxypolyacrylate a,
ii) 0-50% by weight, preferably from 0.1 to 34% by weight, of one or more non-a binders from the group consisting of polyols, polyhydroxypolyurethanes, polyhydroxypolyesters, and polyepoxides.

6. The powder coating slurry as claimed in claim 5, wherein the polyhydroxypolyacrylate a is obtainable by reacting
a1) from 7 to 60% by weight of hydroxyalkyl (meth)acrylates containing primary, secondary and/or tertiary OH groups,
a2) 40-93% by weight of (cyclo)alkyl esters of (meth)acrylic acid having 1 to 18 carbon atoms in the (cyclo)alkyl radical,
a3) 0-10% by weight of (meth)acrylic acid,
a4) 0-30% by weight, preferably 0-10% by weight, of multiple (meth)acrylic esters of polyalcohols,
a5) 0-40% by weight, preferably 0-35% by weight, of comonomers other than a1 to a4. the sum of the parts by weight of components a1 to a5 being 100%, and component a1 being selected with the proviso that at least 40% of the OH groups of the polyhydroxypolyacrylate a are attached to secondary or tertiary carbon atoms, and the polyhydroxypolyacrylate a having an OH number of from 30 to 200, preferably from 70 to 170, an acid number of from 0 to 50, preferably from 0 to 35, an average molar mass (number average determined by means of the GPC method against polystyrene standard) of from 1 500 to 30 000, preferably from 1 700 to 18 000, and a glass transition temperature of from 40 to 85°C, preferably from 45 to 75°C.

7. The powder coating slurry as claimed in any of claims 1 to 6, wherein the crosslinking agent B has an NCO content of from 5.0 to 30% by weight, preferably from 12 to 23% by weight, with an average NCO functionality of at least 2.1, preferably of at least 2.4, and contains less than 1.5% by weight of monomeric diisocyanates having a molecular weight of less than 300, and wherein the crosslinking agent B has a glass transition temperature of from 40 to 150°C, preferably from 50 to 135°C.

8. The powder coating slurry as claimed in any of claims 1 to 7, comprising one or more crosslinking agents other than the crosslinking agent B and selected from the group consisting of amino resins, carbamate resins, and block polyisocyanates in an amount of up to 60% by weight of the crosslinking agent B.

9. The powder coating slurry as claimed in any of claims 1 to 8, wherein deactivators used comprise one or more substances from the group consisting of alcohols, OH-functional polyethers, monoamines, polyamines, OH-functional amines, NH-functional polyethers, and OH- and NH-functional polyethers.

10. A process for preparing the powder coating slurry as claimed in any of claims 1 to 9 by homogenizing the binders A and the crosslinking agents B, grinding the resulting mixture, and wet-grinding the resulting powder to an average particle size below 10 µm, wherein
1) the hydroxyl-containing binders A and the polyisocyanates B have been homogenized such that not less than 30, preferably not less than 60 and in particular not less than 90% by weight of the polyisocyanate B are present in solution or dispersion in the particles comprising the binders A, and
2) the particles of the crosslinking agent B which may still be present in the aqueous phase, and the particles comprising the binders A and the crosslinking agents B, have been stabilized, by way of the isocyanate groups present on their surface, by means of a deactivator added to the aqueous phase.

11. The use of a powder coating slurry as claimed in any of claims 1 to 9 or of a powder coating slurry prepared as claimed in claim 10 for producing a coated substrate, especially a motor vehicle body or a motor vehicle body part, where, following the application if desired of a primer and/or a primer-surfacer, a decorative topcoat material is applied to the substrate and subsequently, following preliminary drying, the powder clearcoat slurry is applied using customary spray application equipment and the topcoat and the powder clearcoat, following further preliminary drying if desired, are baked together.

## Revendications

1. Suspension de peinture en poudre, en particulier suspension de vernis en poudre, contenant au moins un liant A contenant des groupes hydroxy, au moins un polyisocyanate en tant qu'agent de réticulation B et de l'eau, **caractérisée en ce que**
1) les liants A comportant des groupes hydroxy et les polyisocyanates B sont homogénéisés de manière qu'au moins 30, de préférence au moins 60 et en particulier au moins 90 % en poids du polyisocyanate B soient dissous ou dispersés dans les particules contenant les liants A, et
2) les particules de l'agent de réticulation B se trouvant éventuellement encore dans la phase aqueuse ainsi que les particules qui contiennent les liants A et les agents de réticulation B sont stabilisées à l'aide d'un agent d'inactivation ajouté à la phase aqueuse, par l'intermédiaire des groupes isocyanate présents à leur surface.

2. Suspension de peinture en poudre selon la revendication 1, **caractérisée en ce que** les composants A et B sont utilisés en un certain rapport de quantités, étant entendu que les groupes OH et les groupes NCO se trouvent en un rapport molaire OH/NCO allant de 0,6:1 à 1:1,4, de préférence de 0,8à 1:1,2.

3. Suspension de peinture en poudre selon la revendication 1 ou 2, **caractérisée en ce qu'**elle contient des additifs pour peintures usuels, en particulier des agents de dégazage, des agents d'étalement, des photoprotecteurs tels que des absorbeurs d'UV et des capteurs de radicaux, des antimousses, des antioxydants et des stabilisants.

4. Suspension de peinture en poudre selon l'une quelconque des revendications 1 à 3, **caractérisée en ce qu'**elle contient au moins un catalyseur pour la réaction de groupes OH avec des groupes NCO.

5. Suspension de peinture en poudre selon l'une quelconque des revendications 1 à 4, **caractérisée en ce que** le liant A contient :
i) 50-100 % en poids, de préférence 66-100 % en poids d'un polyhydroxypolyacrylate a,
ii) 0-50 % en poids, de préférence 0,1 à 34 % en poids d'un ou plusieurs liants différents de a), choisis dans le groupe polyols, polyhydroxypolyuréthannes, polyhydroxypolyesters et polyépoxydes.

6. Suspension de peinture en poudre selon la revendication 5, **caractérisée en ce que** le polyhydroxypolyacrylate a peut être obtenu par la réaction de
a1) 7 à 60 % en poids de (méth)acrylates d'hydroxyalkyle comportant des groupes OH primaires, secondaires et/ou tertiaires,
a2) 40-93 % en poids d'esters (cyclo)alkyliques de l'acide (méth)acrylique ayant de 1 à 18 atomes de carbone dans le radical (cyclo)alkyle,
a3) 0-10 % en poids d'acide (méth)acrylique,
a4) 0-30 % en poids, de préférence 0-10 % en poids d'esters multiples d'acide (méth)acrylique avec des polyols,
a5) 0-40 % en poids, de préférence 0-35 % en poids de comonomères différents de a1 à a4,
la somme des parties en poids des composants a1 à a5 étant égale à 100 %, le composant a1 étant choisi avec la condition qu'au moins 40 % des groupes OH du polyhydroxypolyacrylate a soient liés à des atomes de carbone secondaires ou tertiaires, et le polyhydroxypolyacrylate a ayant un indice de groupes OH de 30 à 200, de préférence de 70 à 170, un indice d'acide de 0 à 50, de préférence de 0 à 35, une masse moléculaire moyenne (moyenne en nombre, déterminée par la méthode GPC par comparaison avec un étalon polystyrène) de 1 500 à 30 000, de préférence de 1 700 à 18 000, ainsi qu'une température de transition vitreuse de 40 à 85°C, de préférence de 45 à 75°C.

7. Suspension de peinture en poudre selon l'une quelconque des revendications 1 à 6, **caractérisée en ce que** l'agent de réticulation B présente une teneur en groupes NCO de 5,0 à 30 % en poids, de préférence de 12 à 23 % en poids, avec une fonctionnalité NCO moyenne d'au moins 2,1, de préférence d'au moins 2,4, et une teneur de moins de 1,5 % en poids en diisocyanates monomères ayant une masse moléculaire inférieure à 300, et **en ce que** l'agent de réticulation B présente une température de transition vitreuse de 40 à 150°C, de préférence de 50 à 135°C.

8. Suspension de peinture en poudre selon l'une quelconque des revendications 1 à 7, **caractérisée en ce qu'**un ou plusieurs agents de réticulation différents de l'agent de réticulation B est ou sont choisis dans le groupe des résines amino, des résines carbamate et des polyisocyanates coiffés, en une quantité allant jusqu'à 60 % de l'agent de réticulation B.

9. Suspension de peinture en poudre selon l'une quelconque des revendications 1 à 8, **caractérisée en ce qu'**on utilise comme agent d'inactivation une ou plusieurs substances choisies dans le groupe des alcools, polyéthers à fonction OH, monoamines, polyamines, amines à fonction OH, polyéthers à fonction NH et polyéthers à fonction OH et NH.

10. Procédé pour la préparation de la suspension de peinture en poudre selon l'une quelconque des revendications 1 à 9, par homogénéisation du liant A et de l'agent de réticulation B, broyage du mélange résultant et broyage par voie humide de la poudre résultante, à une taille moyenne de grain inférieure à 10 µm, **caractérisé en ce que**
1) les liants A comportant des groupes hydroxy et les polyisocyanates B sont homogénéisés jusqu'à ce qu'au moins 30, de préférence au moins 60 et en particulier au moins 90 % en poids du polyisocyanate B soient dissous ou dispersés dans les particules contenant les liants A, et
2) les particules de l'agent de réticulation B se trouvant éventuellement encore dans la phase aqueuse ainsi que les particules qui contiennent les liants A et les agents de réticulation B sont stabilisées à l'aide d'un agent d'inactivation ajouté à la phase aqueuse, par l'intermédiaire des groupes isocyanate présents à leur surface.

11. Utilisation de la suspension de peinture en poudre selon l'une quelconque des revendications 1 à 9 ou de la suspension de peinture en poudre préparée selon la revendication 10, pour la production d'un subjectile revêtu, en particulier d'une carrosserie d'automobile ou d'une pièce de carrosserie d'automobile, une couche de finition décorative étant appliquée sur le subjectile, éventuellement après application d'un primaire et/ou d'un apprêt de garnissage, et après un préséchage, la suspension de vernis en poudre étant ensuite appliquée à l'aide de dispositifs usuels d'application par pistolage, et la peinture de finition et le vernis en poudre étant éventuellement séchés au four ensemble, après un autre préséchage.
